# FASCICULE DE BREVET EUROPEEN

(11) **EP 3 560 830 B1**
(45) Date de publication et mention de la délivrance du brevet: **12.08.2020**
(21) Numéro de dépôt: 19168743.3
(22) Date de dépôt: 11.04.2019
(51) Int. Cl.: B64C 27/28, B64C 27/22, B64C 27/02, B64C 27/26, B64C 27/06

(54) **GIRAVION MUNI D'UNE VOILURE TOURNANTE ET D'AU MOINS DEUX HELICES, ET PROCEDE APPLIQUE PAR CE GIRAVION**
DREHFLÜGELFLUGZEUG, DAS MIT DREHFLÜGELN UND MINDESTENS ZWEI PROPELLERN AUSGESTATTET IST, UND VON DIESEM DREHFLÜGELFLUGZEUG ANGEWANDTES VERFAHREN
ROTORCRAFT PROVIDED WITH A ROTARY WING AND AT LEAST TWO PROPELLERS, AND METHOD APPLIED BY SAID ROTORCRAFT

(30) Priorité: 26.04.2018 FR 1800372
(43) Date de publication de la demande: 30.10.2019
(73) Titulaire: Airbus Helicopters, 13725 Marignane Cedex (FR)
(72) Inventeur: GAFFIERO, Jacques, 75017 PARIS (FR); SERR, Christophe, 13109 SIMIANE-COLLONGUE (FR); BIHEL, Jean-Romain, 13740 LE ROVE (FR)
(74) Mandataire: GPI & Associés

(56) Documents cités:
- EP-A1- 2 690 012
- CN-A- 105 775 121
- FR-A1- 2 916 418
- FR-A1- 3 024 431
- FR-A1- 3 055 311

## Description

La présente invention concerne un giravion muni d'une voilure tournante et d'au moins deux hélices, et le procédé appliqué par ce procédé.

Les giravions sont des aéronefs munis d'une voilure tournante.

Un giravion connu comporte deux hélices et un rotor principal participant au moins partiellement à la sustentation de l'aéronef. Les deux hélices et le rotor principal sont en permanence mis en rotation par une installation motrice.

Ainsi, une première hélice et une deuxième hélice sont disposées latéralement de part et d'autre d'un fuselage du giravion. La première hélice et la deuxième hélice sont portées par deux demi-ailes s'étendant respectivement de part et d'autre dudit fuselage.

En outre, la première hélice et la deuxième hélice sont munies de pales présentant un pas collectif variable. Les pas des pales de la première hélice peuvent être modifiés de façon identique, à savoir en même temps et de la même manière. Il en va de même pour la deuxième hélice.

Eventuellement, le pas des pales d'au moins une des hélices peut varier dans une première plage de pas générant une poussée selon un sens d'avancement de l'aéronef et dans une deuxième plage de pas générant une poussée dirigée selon un sens de marche arrière contraire au sens d'avancement. Le sens d'avancement et le sens de marche arrière du giravion sont donc fixes, opposés et coplanaires. Une telle hélice génère donc une poussée tendant uniquement à faire avancer l'aéronef lorsque le pas de ses pales est situé dans la première plage, et une poussée contraire au sens d'avancement lorsque le pas de ses pales est situé dans la deuxième plage.

Lors de phases de vol à haute vitesse d'avancement, les pas des pales de la première hélice et de la deuxième hélice sont réglés pour que la première hélice et la deuxième hélice génèrent respectivement une première poussée et une deuxième poussée selon le sens d'avancement. Le rotor principal ainsi que les demi-ailes portant les hélices assurent la portance du giravion. La fonction anticouple est au moins partiellement assurée par une dérive installée sur une poutre de queue. La première poussée et la deuxième poussée peuvent aussi présenter des intensités différentes afin de contrôler la position et le mouvement en lacet du giravion.

Lors des phases de décollage, d'atterrissage, de vol stationnaire et plus généralement de vol à faible vitesse d'avancement, la première hélice peut générer une poussée dans le même sens d'avancement qu'en vol d'avancement à haute vitesse. La deuxième hélice peut par contre générer une poussée dirigée selon le sens de marche arrière pour participer au contrôle de la position et du mouvement en lacet du giravion.

Par suite, un tel aéronef comporte deux hélices ayant un axe de rotation horizontal, cet axe de rotation étant fixe. Seul le pas des pales de chaque hélice peut varier collectivement selon l'intensité et le sens souhaités pour la poussée générée.

Un tel aéronef peut atteindre des vitesses d'avancement élevées. Toutefois, le rotor principal peut alors subir des efforts aérodynamiques importants qui peuvent nécessiter des efforts de commande élevés pour le pilotage du rotor principal et/ou créer des instabilités aérodynamiques en bout de pales de ce rotor principal. Pour éviter ces inconvénients, le diamètre du rotor principal peut être réduit et/ou le vrillage linéique des pales du rotor principal peut être réduit. Bien qu'intéressantes, ces solutions tendent à réduire la portance du rotor principal et donc la portance du giravion à basse vitesse.

Le document FR2916418 décrit un giravion muni d'un rotor principal e de deux hélices.

Le document EP2690012 décrit un giravion muni d'un rotor principal. De plus, ce giravion comporte deux hélices portées par une aile dite « canard ». Les hélices sont des hélices orientables qui peuvent être basculées autour d'un axe de basculement. Une telle hélice orientable présente des pales effectuant une rotation autour d'un axe de rotation, cet axe de rotation étant mobile en rotation par rapport au fuselage de l'aéronef. Plus précisément, chaque axe de rotation peut effectuer une rotation autour d'un axe de basculement.

Le document US 7823827 décrit un giravion. Ce giravion est muni d'un fuselage portant deux rotors principaux. De plus, le giravion comporte deux hélices carénées qui sont disposées latéralement de part et d'autre du fuselage et longitudinalement entre les deux rotors principaux. Les deux hélices peuvent être orientables entre une position où elles exercent une poussée participant à l'avancement de l'aéronef et une position où elles exercent une poussée participant à la sustentation de l'aéronef. Les hélices peuvent comprendre des volets.

Les documents FR 3055311, FR 3024431 et CN105775121 sont aussi connus.

La présente invention a alors pour objet de proposer un giravion innovant présentant une portance optimisée à basse vitesse, ce giravion comprenant un seul rotor principal et deux hélices.

Un tel giravion comprend un fuselage, le fuselage s'étendant longitudinalement de l'arrière vers l'avant d'une queue vers un nez et transversalement d'un premier flanc vers un deuxième flanc, le fuselage s'étendant verticalement de bas en haut et étant surmonté d'un unique rotor principal participant au moins partiellement à la sustentation du giravion. Un référentiel orthonormé lié à ce giravion présente un premier vecteur s'étendant selon un sens d'avancement du centre de gravité du giravion vers l'avant, le référentiel orthonormé présentant un deuxième vecteur s'étendant à partir du centre de gravité selon un sens allant du premier flanc au deuxième flanc, le référentiel orthonormé présentant un troisième vecteur s'étendant selon un sens en élévation à partir du centre de gravité vers le rotor principal. Ce giravion comprend une première hélice et une deuxième hélice portées respectivement par deux bras et exerçant respectivement une première poussée et une deuxième poussée, lesdits deux bras ne formant pas une aile canard, la première hélice et la deuxième hélice étant agencées transversalement de part et d'autre dudit fuselage, ladite première hélice et ladite deuxième hélice ayant respectivement des premières pales et des deuxièmes pales effectuant une rotation respectivement autour d'un premier axe de rotation et d'un deuxième axe de rotation. Les premières pales présentent respectivement des pas pouvant varier collectivement de façon identique dans une première plage de pas générant une dite première poussée dirigée vers l'avant du giravion et dans une deuxième plage de pas générant une dite première poussée dirigée vers l'arrière du giravion, lesdites deuxièmes pales présentant des pas pouvant varier collectivement de façon identique, à savoir de façon identique entre elles, au moins dans une troisième plage de pas générant uniquement une dite deuxième poussée dirigée vers l'avant du giravion.

Le giravion peut ainsi comprendre un premier système de modification du pas collectif des premières pales et un deuxième système de modification du pas collectif des deuxièmes pales usuels.

Chaque bras peut prendre la forme d'une surface sustentatrice, telle qu'une demi-aile.

De plus, ce giravion comporte un système de réglage agissant sur la première hélice et la deuxième hélice, le système de réglage étant configuré pour positionner au moins durant une phase de vol stationnaire la première hélice dans une première configuration basse vitesse, la première poussée comprenant dans la première configuration basse vitesse une première composante horizontale dirigée parallèlement au premier vecteur et selon un sens contraire au premier vecteur et une première composante verticale dirigée parallèlement au troisième vecteur selon le sens en élévation, ledit système de réglage étant configuré pour positionner au moins durant la phase de vol stationnaire ladite deuxième hélice dans une deuxième configuration basse vitesse, la deuxième poussée comprenant dans la deuxième configuration basse vitesse une deuxième composante horizontale dirigée parallèlement au premier vecteur et selon un sens du premier vecteur et une deuxième composante verticale dirigée parallèlement au troisième vecteur selon un sens du troisième vecteur.

Le premier vecteur peut être perpendiculaire au deuxième vecteur et au troisième vecteur. Par exemple, le premier vecteur s'étend le long d'un axe de roulis du giravion et/ou le deuxième vecteur s'étend le long d'un axe de tangage du giravion et/ou le troisième vecteur s'étend le long d'un axe de lacet du giravion

Le giravion comporte alors un rotor principal et deux hélices latérales. Un tel giravion est donc susceptible d'atteindre de grandes vitesses d'avancement. Le rotor principal peut toutefois être dimensionné pour éviter les désagréments listés précédemment.

En outre, la première hélice et la deuxième hélice sont configurées pour d'une part générer des poussées permettant au giravion d'atteindre de grandes vitesses d'avancement et, d'autre part pour apporter un surcroit de portance au moins en vol stationnaire afin de pouvoir utiliser un rotor principal à taille réduite. En effet en vol stationnaire la première poussée générée par la première hélice et la deuxième poussée générée par la deuxième hélice présentent chacune une composante verticale s'étendant vers le haut du giravion dans le référentiel du giravion.

Ce giravion peut de plus comprendre une ou plusieurs des caractéristiques qui suivent.

Eventuellement, la première hélice et/ou la deuxième hélice peuvent être carénées. Par exemple, deux carènes entourent respectivement les premières pales et les deuxièmes pales dans leurs plans de rotation.

Selon un aspect, le système de réglage peut être configuré pour positionner la première hélice dans la première configuration basse vitesse et la deuxième hélice dans la deuxième configuration basse vitesse lorsque le giravion évolue vers l'avant à une vitesse inférieure à un seuil de vitesse.

A titre illustratif, le seuil de vitesse peut être égal à 50 nœuds, soit environ 92.6 kilomètres par heure. Dès lors, à moins de 50 nœuds, la première hélice et la deuxième hélice sont respectivement dans la première configuration basse vitesse et dans la deuxième configuration basse vitesse.

Selon un aspect, dans la première configuration basse vitesse ladite première poussée peut présenter un angle aigu inférieur à 90 degrés avec un plan horizontal contenant le premier vecteur et le deuxième vecteur, la deuxième poussée présentant un angle aigu inférieur à 90 degrés avec ce plan horizontal.

Selon un premier mode de réalisation, le système de réglage peut être configuré pour positionner la première hélice dans une première configuration haute vitesse et la deuxième hélice dans une deuxième configuration haute vitesse lorsque le giravion évolue vers l'avant à une vitesse supérieure ou égale à un seuil de vitesse, ladite première poussée ayant dans la première configuration haute vitesse une première composante horizontale dirigée parallèlement au premier vecteur et selon le sens du premier vecteur et une première composante verticale dirigée parallèlement au troisième vecteur selon un sens contraire au sens du troisième vecteur, la deuxième configuration haute vitesse étant identique à la deuxième configuration basse vitesse.

Ainsi, à basse vitesse, la première hélice exerce une première poussée dirigée vers le haut et l'arrière du giravion, la deuxième hélice exerçant une deuxième poussée dirigée vers le haut et l'avant du giravion. A haute vitesse, la première hélice exerce une première poussée dirigée vers le bas et l'avant du giravion, la deuxième hélice exerçant une deuxième poussée dirigée vers le haut et l'avant du giravion.

Cette configuration est étonnante puisque la première poussée tend à être dirigée vers le sol, et non pas à porter le giravion. Toutefois, la première composante verticale de la première poussée dirigée vers le sol peut être compensée par la deuxième composante verticale de la deuxième poussée.

Selon ce premier mode de réalisation, le sens de la première poussée peut être inversé.

Par exemple, selon ce premier mode de réalisation lorsque le giravion évolue vers l'avant à une vitesse supérieure ou égale à un seuil de vitesse, vu selon une direction transversale allant de la première hélice vers la deuxième hélice, ladite première poussée peut présenter un premier angle aigu avec un plan horizontal contenant le premier vecteur et le deuxième vecteur, la deuxième poussée présentant un deuxième angle aigu opposé au premier angle aigu avec ce plan horizontal.

Selon ce premier mode de réalisation, vu selon une direction transversale allant de la première hélice vers la deuxième hélice, ledit premier axe de rotation peut présenter un premier angle aigu avec un plan horizontal contenant le premier vecteur et le deuxième vecteur, le deuxième axe de rotation présentant un deuxième angle aigu opposé au premier angle aigu avec ce plan horizontal.

Selon ce premier mode de réalisation, ladite première hélice comprenant un premier arbre d'hélice mettant en rotation un premier moyeu portant des pales, ladite deuxième hélice comprenant un deuxième arbre d'hélice mettant en rotation un deuxième moyeu portant des pales, ledit système de réglage comporte un premier dispositif fixant le premier arbre d'hélice à un bras en conférant uniquement un degré de liberté en rotation autour du premier axe de rotation au premier arbre d'hélice par rapport au fuselage, ledit système de réglage comportant un deuxième dispositif fixant le deuxième arbre d'hélice à un bras en conférant uniquement un degré de liberté en rotation autour du deuxième axe de rotation au deuxième arbre d'hélice par rapport au fuselage.

La première hélice et la deuxième hélice peuvent être toutes deux fixes et calées sur le giravion selon un angle de façon à présenter des composantes additionnelles tendant à optimiser sa portance. La première hélice est calée vers le bas de l'aéronef alors que la deuxième est calée vers le haut.

Le système de réglage peut aussi inclure dans ce cas le premier système de modification du pas collectif des premières pales et le deuxième système de modification du pas collectif des deuxièmes pales usuels.

Selon un deuxième mode de réalisation, le système de réglage peut basculer/incliner la première poussée et la deuxième poussée autour d'un axe de basculement.

Selon le deuxième mode de réalisation, le système de réglage peut être configuré pour positionner la première hélice dans une première configuration haute vitesse et la deuxième hélice dans une deuxième configuration haute vitesse lorsque le giravion évolue vers l'avant à une vitesse supérieure ou égale à un seuil de vitesse, dans la première configuration haute vitesse la première poussée comprenant uniquement une première composante horizontale dirigée parallèlement au premier vecteur et selon le sens du premier vecteur, dans la deuxième configuration haute vitesse ladite deuxième poussée comprenant uniquement une deuxième composante horizontale dirigée parallèlement au premier vecteur et selon le sens du premier vecteur.

Selon ce deuxième mode de réalisation, le système de réglage permet de basculer continument la première poussée et la deuxième poussée autour de l'axe de basculement éventuellement mais non obligatoirement de la configuration à basse vitesse jusqu'à la configuration à haute vitesse précédentes.

Selon ce deuxième mode de réalisation, lorsque le giravion évolue vers l'avant à une vitesse supérieure ou égale à un seuil de vitesse, ladite première poussée et la deuxième poussée peuvent être coplanaires et parallèles à un plan horizontal contenant le premier vecteur et le deuxième vecteur.

Alternativement, d'autres inclinaisons sont envisageables, notamment à une vitesse supérieure ou égale à un seuil de vitesse. Par exemple, la première poussée et la deuxième poussée peuvent être orientées selon le vecteur vitesse de l'aéronef à haute vitesse.

Selon une première variante du deuxième mode de réalisation, ladite première hélice comprenant un premier arbre d'hélice mettant en rotation un premier moyeu portant des pales, ladite deuxième hélice comprenant un deuxième arbre d'hélice mettant en rotation un deuxième moyeu portant des pales, ledit système de réglage peut comporter un premier système de mobilité configuré pour déplacer en rotation le premier arbre d'hélice autour d'un axe de basculement en conférant au premier arbre d'hélice par rapport au fuselage uniquement un degré de liberté en rotation autour du premier axe de rotation et un degré de liberté en rotation autour de l'axe de basculement, ledit système de réglage comportant un deuxième système de mobilité configuré pour déplacer en rotation le deuxième arbre d'hélice autour de l'axe de basculement en conférant au deuxième arbre d'hélice par rapport au fuselage uniquement un degré de liberté en rotation autour du deuxième axe de rotation et un degré de liberté en rotation autour de l'axe de basculement.

La première hélice et la deuxième hélice sont alors des hélices orientables, par exemple respectivement selon deux secteurs angulaires inférieurs à 90 degrés. Le système de réglage permet donc de basculer la première hélice et la deuxième hélice entre diverses positions pour orienter la première poussée et la deuxième poussée vers le haut à basse vitesse afin de générer un surcroit de portance et pour orienter la première poussée et la deuxième poussée par exemple selon le sens d'avancement ou le vecteur vitesse de l'aéronef à haute vitesse.

Selon cette première variante du deuxième mode de réalisation, la première hélice peut être configurée pour basculer selon un premier sens de basculement d'une première position à tenir dans la première configuration basse vitesse à une deuxième position à tenir dans la première configuration haute vitesse, le premier axe de rotation et la première poussée étant confondus et présentant un premier angle aigu inférieur à 90 degrés avec un plan horizontal contenant le premier vecteur et le deuxième vecteur dans la première position, le premier axe de rotation et la première poussée étant par exemple parallèles au plan horizontal dans la deuxième position.

La deuxième hélice peut être configurée pour basculer selon un deuxième sens de basculement d'une troisième position à tenir dans la deuxième configuration basse vitesse à une quatrième position à tenir dans la deuxième configuration haute vitesse, le deuxième axe de rotation et la deuxième poussée étant confondus et présentant un deuxième angle aigu inférieur à 90 degrés avec le plan horizontal, le deuxième sens de basculement étant opposé au premier sens de basculement vu selon une direction transversale allant de la première hélice vers la deuxième hélice, le deuxième axe de rotation et la deuxième poussée étant par exemple parallèles au le plan horizontal dans la quatrième position.

Selon un aspect, le basculement de la première hélice et de la deuxième hélice peut se faire selon des angles opposés. La deuxième hélice générant une poussée vers l'avant pivote vers le haut du giravion, alors que la première hélice générant une poussée vers l'arrière pivote vers le bas du giravion.

Les angles de basculement sont par exemple dimensionnés en fonction des puissances développées par chaque hélice afin que les deux hélices assurent une fonction anticouple tout en présentant une composante de portance verticale.

Selon cette première variante du deuxième mode de réalisation, le rotor principal peut comporter des pales principales effectuant une rotation autour d'un axe de rotation principal de ce rotor principal, ledit axe de basculement coupant ledit axe de rotation principal

Selon cette première variante du deuxième mode de réalisation, la première hélice peut présenter un premier centre de poussée positionné sur l'axe de basculement et la deuxième hélice présente un deuxième centre de poussée positionné sur l'axe de basculement.

Ces deux dernières caractéristiques peuvent chacune tendre à limiter la création d'efforts parasites néfastes lors des basculements des hélices.

Eventuellement, les pas des premières pales de la première hélice et des deuxièmes pales de la deuxième hélice sont uniquement variable collectivement ou sont variables collectivement et cycliquement.

Par exemple et selon une deuxième variante du deuxième mode de réalisation, la première hélice pouvant comprendre un premier arbre d'hélice mettant en rotation un premier moyeu portant des pales, ladite deuxième hélice pouvant comprendre un deuxième arbre d'hélice mettant en rotation un deuxième moyeu portant des pales, ledit système de réglage peut comporter un premier dispositif de modification cyclique du pas des pales de la première hélice et un deuxième dispositif de modification cyclique du pas des pales de la deuxième hélice.

Le premier dispositif de modification cyclique du pas des pales de la première hélice et un deuxième dispositif de modification cyclique du pas des pales de la deuxième hélice permettent respectivement de modifier le pas des premières pales et des deuxièmes pales en fonction de leurs azimuts.

Le premier axe de rotation de la première hélice et le deuxième axe de rotation de la deuxième hélice peuvent être en permanence dans un même plan.

Le premier axe de rotation de la première hélice et le deuxième axe de rotation de la deuxième hélice sont fixes et horizontaux dans le référentiel du giravion. Par contre, la première hélice et la deuxième hélice peuvent par exemple être équipées d'un ensemble de plateaux cycliques du type connu sur un rotor principal d'hélicoptère. Le réglage de la position et des angles des plateaux des ensembles de plateaux cycliques permet d'orienter la première poussée et la deuxième poussée.

Outre un giravion, l'invention vise aussi un procédé pour optimiser la portance d'un tel giravion.

Ce procédé comporte l'étape suivante :
- positionnement de la première hélice dans la première configuration basse vitesse et de la deuxième hélice dans la deuxième configuration basse vitesse durant une phase de vol stationnaire.

Eventuellement, le procédé comporte l'étape suivante :
- positionnement de la première hélice dans la première configuration haute vitesse et de la deuxième hélice dans la deuxième configuration haute vitesse lorsque le giravion évolue vers l'avant à une vitesse supérieure ou égale à un seuil de vitesse.

L'invention et ses avantages apparaîtront avec plus de détails dans le cadre de la description qui suit avec des exemples donnés à titre illustratif en référence aux figures annexées qui représentent :
- les figures 1 à 3, des vues illustrant un aéronef muni d'un système de réglage conférant aux hélices un calage fixe,
- les figures 4 à 8, des vues illustrant un aéronef muni d'un système de réglage ayant des systèmes de basculement des hélices selon des sens opposés vu de côté, et
- les figures 9 à 11, des vues illustrant un aéronef muni d'un système de réglage ayant des systèmes de modification du pas cyclique des pales des hélices.

Les éléments présents dans plusieurs figures distinctes sont affectés d'une seule et même référence.

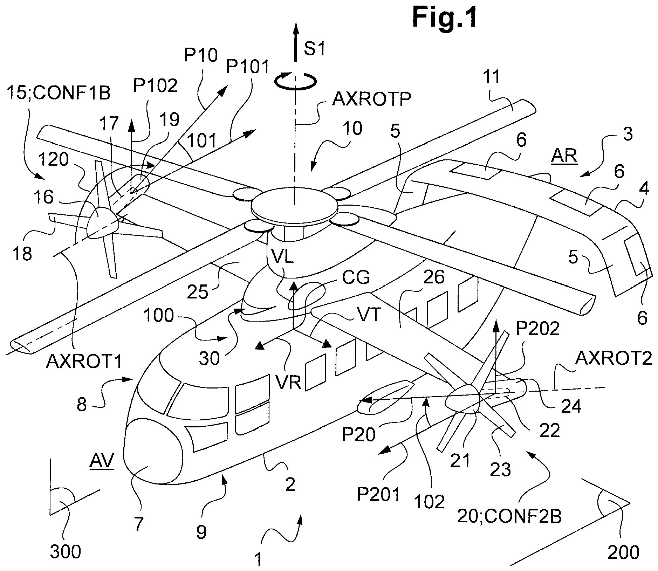

Les figures 1 à 11 présentent diverses réalisations d'un giravion selon l'invention.

Quelle que soit la réalisation et en référence à la figure 1, un tel giravion 1 comporte un fuselage 2. Ce fuselage 2 s'étendant longitudinalement le long d'un axe de roulis de l'arrière AR vers l'avant AV d'une queue 3 vers un nez 7. Classiquement, un poste de pilotage et/ou une cabine peuvent être agencés au niveau du nez. De plus, l'aéronef peut comprendre au moins un empennage 4 et au moins une dérive 5 au niveau de sa queue 3. Selon l'exemple représenté, le giravion 1 comporte une structure en forme de U inversé comprenant un empennage 4 et deux dérives 5 qui sont disposées transversalement de part et d'autre de l'empennage. L'empennage 4 et/ou au moins une dérive 5 peuvent comprendre des volets 6.

En outre, le fuselage 2 s'étend transversalement le long d'un axe de tangage du giravion d'un premier flanc 8 vers un deuxième flanc 9. Ce fuselage 2 s'étend de plus verticalement de bas en haut le long d'un axe de tangage.

Le giravion 1 comporte par ailleurs un unique rotor principal 10 qui participe à la sustentation voire à la propulsion de ce giravion 1. Le rotor principal 10 comporte des pales principales 11 situées au dessus du fuselage 2. Ces pales principales 11 effectuent conjointement une rotation autour d'un axe de rotation AXROTP. Le giravion peut comprendre des commandes usuelles contrôlant un premier système de modification collectif du pas des premières pales et un deuxième système de modification collectif du pas des deuxièmes pales. Un tel système de modification collectif du pas peut comprendre un ensemble de plateaux cycliques pour conférer à un pilote humain et/ou automatique la possibilité de modifier collectivement et/ou cycliquement le pas des pales principales 11.

Le rotor 10 peut être entraîné en rotation par une installation motrice 30, par exemple en permanence en dehors de cas de panne moteur et de phases de test. Une telle installation motrice peut comprendre un ou plusieurs moteurs, au moins une boîte de transmission de puissance...

Selon un autre aspect, le giravion comporte au moins deux hélices, et par exemple au moins une première hélice 15 et une deuxième hélice 20. La première hélice 15 et la deuxième hélice 20 sont agencées transversalement de part et d'autre du fuselage 2, la première hélice étant par exemple située du côté du premier flanc 8 et la deuxième hélice étant par exemple située du côté du deuxième flanc 9.

La première hélice 15 et la deuxième hélice 20 peuvent être portées respectivement par deux bras 25, 26 solidaires du fuselage 2. De tels bras 25, 26 peuvent être des organes sustentateurs. Selon l'exemple illustré sur la figure 1, les deux bras représentent deux demi-ailes d'une aile haute, ces demi-ailes ayant une forme en plan sensiblement rectangulaire et présentant un dièdre négatif. Selon un aspect, les bras ne forment pas une aile canard.

De manière usuelle, la première hélice 15 peut comprendre un premier arbre 17 d'hélice mettant en rotation un premier moyeu 16 portant des premières pales 18. Le premier arbre 17 est solidaire en rotation autour du premier axe de rotation du premier moyeu et des premières pales.

De même, la deuxième hélice 20 peut comprendre un deuxième arbre 22 d'hélice mettant en rotation un deuxième moyeu 21 portant des deuxièmes pales 23. Le deuxième arbre 22 est solidaire en rotation autour du deuxième axe de rotation du deuxième moyeu et des deuxièmes pales.

Le premier arbre 17 d'hélice et le deuxième arbre 22 d'hélice sont reliés mécaniquement à l'installation motrice 30 par des chaînes mécaniques usuelles. Le premier arbre 17 d'hélice et le deuxième arbre 22 d'hélice sont entraînés en rotation par cette installation motrice 30 au moins en vol en dehors de cas de panne ou de test.

Le giravion peut comprendre des commandes usuelles contrôlant un ensemble de plateaux cycliques et/ou un piston pour conférer à un pilote humain et/ou automatique la possibilité de modifier au moins collectivement le pas des premières pales 18 et des deuxièmes pales 23. Par exemple, un levier peut commander deux servocommandes à cet effet. Des dispositifs de commande collectifs du type du document FR 2 992 696 sont notamment possibles.

Dès lors, les pas des premières pales 18 peuvent varier collectivement de façon identique pour modifier l'intensité et le sens de la première poussée exercée par la première hélice 15. En effet, les pas des premières pales 18 peuvent varier collectivement dans une première plage de pas générant une première poussée P1 dirigée vers l'avant du giravion 1 et dans une deuxième plage de pas générant une première poussée dirigée vers l'arrière du giravion.

Les termes « avant » et « arrière » signifient que si le pas des premières pales 18 est dans la première plage, la première hélice exerce une première poussée tendant à faire avancer le giravion. Par contre, à l'inverse, si le pas des premières pales 18 est dans la deuxième plage, la première hélice exerce une première poussée tendant à faire reculer le giravion.

Par ailleurs, les deuxièmes pales 23 présentent des pas pouvant varier collectivement de façon identique au moins dans une troisième plage de pas générant uniquement une deuxième poussée P2 dirigée vers l'avant du giravion. Eventuellement mais non obligatoirement, les deuxièmes pales 23 présentent des pas pouvant varier collectivement dans une quatrième plage de pas générant une deuxième poussée P2 dirigée vers l'arrière du giravion.

Par ailleurs, le giravion 1 est lié à un référentiel orthonormé 100. Ce référentiel orthonormé 100 possède un premier vecteur VR s'étendant selon un sens d'avancement vers l'avant du giravion, du centre de gravité CG du giravion 1 sensiblement vers le nez 7, par exemple en suivant l'axe de roulis du giravion. Ce référentiel orthonormé 100 possède aussi un deuxième vecteur VT qui s'étend à partir du centre de gravité CG selon un sens allant du premier flanc 8 au deuxième flanc 9, par exemple en suivant l'axe de tangage du giravion. Enfin, le référentiel orthonormé 100 possède un troisième vecteur VL s'étendant selon un sens en élévation S1 à partir du centre de gravité CG vers le rotor principal 10, par exemple en suivant l'axe de lacet du giravion. Le premier vecteur VR et le deuxième vecteur VT définissent un plan horizontal 200. Le premier vecteur VR et le troisième vecteur VL définissent un plan vertical 300.

Par ailleurs, le giravion 1 comporte un système de réglage 50 agissant sur la première hélice 15 et la deuxième hélice 20 pour régler la première poussée et la deuxième poussée.

Durant une phase de vol stationnaire et/ou durant une phase de vol d'avancement se produisant en dessous du seuil de vitesse, par exemple un seuil de vitesse égal à 50 nœuds, ce système de réglage 50 place la première hélice 15 dans une première configuration basse vitesse conf1b et la deuxième hélice 20 dans une deuxième configuration basse vitesse conf2b illustrées notamment sur les figures 1,5 et 11 suivant les variantes.

Ce système de réglage comporte au moins le premier système de modification du pas collectif des premières pales.

Quelle que soit la variante et en référence à la figure 1, dans la première configuration basse vitesse conf1b, la première poussée P10 présente un angle 101 aigu inférieur à 90 degrés avec le plan horizontal 200, la deuxième poussée P20 présentant aussi un angle 102 aigu inférieur à 90 degrés avec ce plan horizontal 200.

La première poussée P10 et la deuxième poussée P20 sont en outre éventuellement parallèles au plan vertical 300.

Selon un aspect, en considérant un angle positivement selon un sens allant du premier vecteur VR au troisième vecteur VL, une projection de la première poussée P10 dans le plan vertical présente un angle 120 obtus positif avec le premier vecteur VR et une projection de la deuxième poussée P20 dans le plan vertical présente un angle 102 aigu positif avec le premier vecteur VR.

La première poussée P10 peut donc être décomposée en une première composante horizontale P101 et une première composante verticale P102. La première composante horizontale P101 est dirigée parallèlement au premier vecteur VR et selon un sens contraire au premier vecteur VR, et donc vers l'arrière AR du giravion. La première composante verticale P102 est dirigée parallèlement au troisième vecteur VL et selon le sens en élévation S1, à savoir de bas en haut dans le référentiel du giravion.

Dans la deuxième configuration basse vitesse conf2b, la deuxième poussée P20 comprend aussi une deuxième composante horizontale P201 et une deuxième composante verticale P202. La deuxième composante horizontale P201 est parallèle au premier vecteur VR et s'étend selon le sens du premier vecteur VR. La deuxième composante verticale P202 est parallèle au troisième vecteur VL selon le sens du troisième vecteur VL.

Dès lors, la première composante horizontale et la deuxième composante horizontale tendent à générer un couple permettant de contrôler le mouvement en lacet du giravion, et notamment à contrer le couple exercé par le rotor principal sur le fuselage.

La première composante verticale et la deuxième composante verticale tendent conjointement à sustenter le giravion.

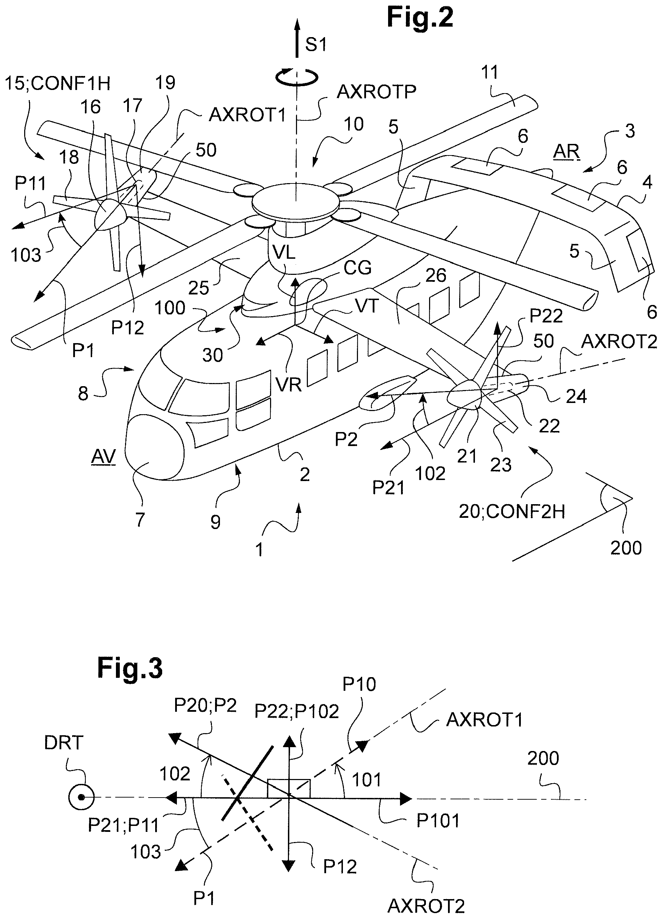

Si la vitesse de l'aéronef est supérieure ou égale au seuil de vitesse, le système de réglage 50 place la première hélice 15 dans une première configuration haute vitesse conf1h et la deuxième hélice 20 dans une deuxième configuration haute vitesse conf2h, illustrées sur notamment sur les figures 2, 4 et 10 suivant les variantes, pour assurer l'avancement du giravion.

Selon le premier mode de réalisation des figures 1 à 3 et en référence à la figure 2, dans la première configuration haute vitesse conf1h la première poussée P1 présente une première composante horizontale P11 dirigée parallèlement au premier vecteur VR et selon le sens de ce premier vecteur VR et une première composante verticale P12 dirigée parallèlement au troisième vecteur selon un sens contraire au sens de ce troisième vecteur VL

La deuxième configuration haute vitesse conf2h est en outre identique à la deuxième configuration basse vitesse conf2b.

La première poussée P1 et la deuxième poussée P2 sont en outre éventuellement parallèles au plan vertical 300.

Selon un aspect, en considérant un angle positivement selon un sens allant du premier vecteur VR au troisième vecteur VL, une projection de la première poussée P1 dans le plan vertical présente un angle 103 aigu négatif avec le premier vecteur VR et une projection de la deuxième poussée P2 dans le plan vertical présente un angle 102 aigu positif avec le premier vecteur VR.

Dès lors, la première composante horizontale et la deuxième composante horizontale peuvent tendre à générer un couple permettant de contrôler le mouvement en lacet du giravion, et tendent à assurer l'avancement du giravion vers l'avant.

La première composante verticale et la deuxième composante verticale tendent à s'annuler, le giravion étant sustenté par le rotor principal et les diverses surfaces sustentatrices.

Eventuellement, la première hélice 15 et la deuxième hélice 20 ont un calage fixe, le premier axe de rotation AXROT1 et le deuxième axe de rotation AXROT2 étant fixes par rapport au fuselage 2.

A cet effet, le système de réglage 50 peut comporter un premier dispositif 19 attachant le premier arbre 17 d'hélice à un bras 25 en conférant uniquement un degré de liberté en rotation autour du premier axe de rotation AXROT1 à ce premier arbre 17 d'hélice par rapport au fuselage 2. De même, le système de réglage 50 comporte un deuxième dispositif 24 attachant le deuxième arbre 22 d'hélice à un bras 26 en conférant uniquement un degré de liberté en rotation autour du deuxième axe de rotation AXROT2 au deuxième arbre 2 d'hélice par rapport au fuselage 2.

Par exemple, le premier dispositif comporte une première nacelle 19 de l'hélice fixée à un premier bras 25 par des moyens usuels de soudure, de rivetage, de collage, de vissage.... Le premier arbre 17 d'hélice est alors porté par la première nacelle en étant mobile en rotation par rapport à la première nacelle. Par exemple des moyens de roulement sont interposés entre la première nacelle et le premier arbre 17. De même, le deuxième dispositif peut comporter une deuxième nacelle 24 de l'hélice fixée à un deuxième bras 25. Le deuxième arbre 22 d'hélice est alors porté par la deuxième nacelle et mobile en rotation par rapport à la deuxième nacelle. Par exemple des moyens de roulement sont interposés entre la deuxième nacelle et le deuxième arbre 22.

Autrement dit, la première hélice et la deuxième hélice ont chacune un calage fixe par rapport au fuselage.

Pour positionner le giravion dans une configuration à basse vitesse illustrée sur la figure 1, le pas des premières pales est alors réglé par le premier système de modification du pas collectif des premières pales pour se trouver dans la deuxième plage de pas. Pour positionner le giravion dans la configuration à haute vitesse illustrée sur la figure 2, le pas des premières pales est réglé par le premier système de modification du pas collectif des premières pales pour se trouver dans la première plage de pas.

Par ailleurs et en référence à la figure 3, lorsque le giravion 1 évolue vers l'avant à une vitesse supérieure ou égale à un seuil de vitesse, vu selon une direction transversale drt allant de la première hélice 15 vers la deuxième hélice 20, la première poussée P1 peut présenter un premier angle 103 aigu avec le plan horizontal 200. La deuxième poussée P2 peut en outre présenter un deuxième angle 102 aigu opposé au premier angle aigu 103 avec ce plan horizontal 200.

En considérant un angle positivement selon un sens allant du premier vecteur VR au troisième vecteur VL, une projection de la première poussée P1 dans le plan vertical présente un premier angle 103 négatif avec le premier vecteur VR et une projection de la deuxième poussée P2 dans le plan vertical présente un deuxième angle 102 aigu positif avec le premier vecteur VR.

De même, vu selon la direction transversale drt, le premier axe de rotation AXROT1 peut présenter le premier angle 103 aigu avec le plan horizontal 200, le deuxième axe de rotation AXROT2 présentant le deuxième angle 102 aigu opposé au premier angle 103 aigu avec ce plan horizontal 200.

Selon le premier mode de réalisation, la première poussée peut toujours être exercée selon le premier axe de rotation, la deuxième poussée étant toujours exercée selon le deuxième axe de rotation.

Selon le deuxième mode de réalisation la première poussée et la deuxième poussée peuvent être basculées au moins autour d'un axe de basculement.

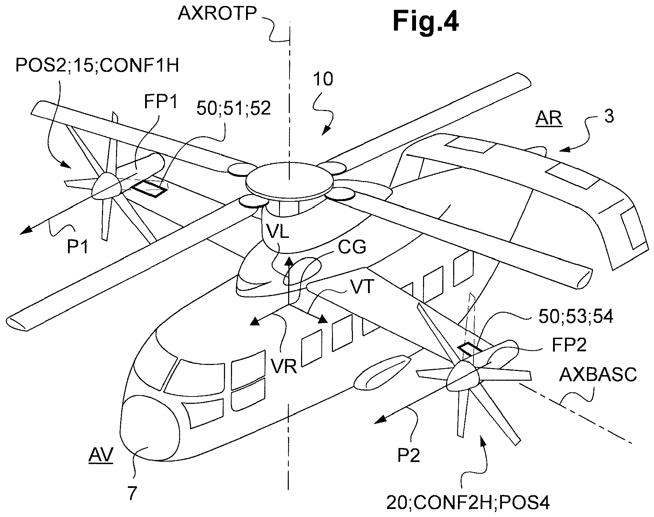

Selon le deuxième mode de réalisation illustré sur les figures 4 à 11 et en référence à la figure 4, dans la première configuration haute vitesse conf1h la première poussée P1 peut comprendre uniquement une première composante horizontale dirigée parallèlement au premier vecteur VR et selon le sens du premier vecteur VR.

De même, dans la deuxième configuration haute vitesse conf2h la deuxième poussée P2 peut comprendre uniquement une deuxième composante horizontale dirigée parallèlement au premier vecteur VR et selon le sens du premier vecteur VR.

Eventuellement, lorsque le giravion 1 évolue vers l'avant à une vitesse supérieure ou égale au seuil de vitesse, la première poussée P1 et la deuxième poussée P2 sont coplanaires et parallèles au plan horizontal 200.

Alternativement, à haute vitesse la première poussée et la deuxième poussée peuvent présenter d'autres inclinaisons, et par exemple peuvent être orientées selon le vecteur vitesse de l'aéronef.

Indépendamment de ces aspects, selon une première variante du deuxième mode de réalisation illustrée sur la figure 4, le système de réglage 50 peut comporter un premier système de mobilité 51. Ce premier système de mobilité 51 peut déplacer en rotation le premier arbre 17 d'hélice autour d'un axe de basculement AXBASC en conférant au premier arbre 17 d'hélice par rapport au fuselage 2 uniquement un degré de liberté en rotation autour du premier axe de rotation AXROT1 et un degré de liberté en rotation autour de l'axe de basculement AXBASC.

De même, le système de réglage 50 comporte un deuxième système de mobilité 53. Ce deuxième système de mobilité 53 peut déplacer en rotation le deuxième arbre d'hélice autour de l'axe de basculement AXBASC en conférant au deuxième arbre 22 d'hélice par rapport au fuselage 2 uniquement un degré de liberté en rotation autour du deuxième axe de rotation AXROT2 et un degré de liberté en rotation autour de l'axe de basculement AXBASC.

Par exemple, le premier système de mobilité 51 peut être d'un type connu et peut comprendre un moteur 52 mettant en rotation une première nacelle de la première hélice. De même le deuxième système de mobilité 53 peut être d'un type connu et peut comprendre un moteur 54 mettant en rotation une deuxième nacelle de la deuxième hélice. Les moteurs 52, 54 peuvent être portés par les bras 25, 26. L'enseignement notamment du document FR 3055311 peut être utilisé.

L'axe de basculement AXBASC peut couper l'axe de rotation principal AXROTP du rotor principal pour favoriser le basculement de la première hélice et le basculement de la deuxième hélice.

Selon un autre aspect, la première hélice 15 peut présenter un premier centre de poussée FP1 positionné sur l'axe de basculement AXBASC. De même, la deuxième hélice 20 peut présenter un deuxième centre de poussée FP2 positionné sur l'axe de basculement AXBASC.

Dans la première configuration basse haute conf1h, la première hélice peut se trouver dans une position dite « deuxième position POS2 » en présentant un premier axe de rotation parallèle au premier vecteur VR selon l'exemple de la figure 4.

De même, dans la deuxième configuration haute vitesse conf2h, la deuxième hélice peut se trouver dans une position dite « quatrième position POS4 » en présentant un deuxième axe de rotation parallèle au premier vecteur VR selon l'exemple de la figure 4. Le pas des premières pales est alors réglé par premier système de modification du pas collectif des premières pales pour se trouver dans la deuxième plage de pas. De même, le pas des deuxièmes pales est réglé par le deuxième système de modification du pas collectif des deuxièmes pales pour se trouver dans la troisième plage de pas.

Le premier axe de rotation AXROT1, la première poussée P1, le deuxième axe de rotation AXROT2 et la deuxième poussée P2 sont alors parallèles au plan horizontal 200.

Alternativement, au dessus du seuil de vitesse la première poussée et la deuxième poussée peuvent être par exemple orientées parallèlement au vecteur vitesse de l'aéronef pour réduire les efforts dynamiques exercés sur les hélices.

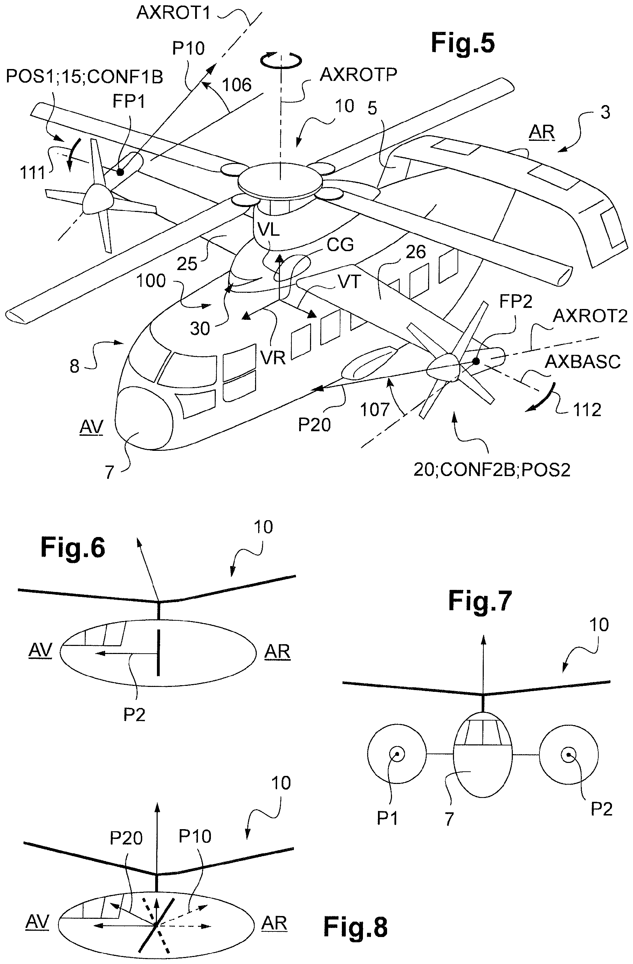

En référence à la figure 5, lorsque la vitesse du giravion devient égale ou inférieure au seuil de vitesse, le premier système de mobilité 51 bascule selon un premier sens de basculement 111 la première hélice de la deuxième position POS2 vers une première position POS1 à tenir dans la première configuration basse vitesse conf1b. Le premier axe de rotation AXROT1 et la première poussée P10 sont confondus et présentent un premier angle 106 négatif aigu inférieur à 90 degrés avec le plan horizontal 200.

Le deuxième système de mobilité 53 bascule selon un deuxième sens de basculement 112 la deuxième hélice de la quatrième position POS4 vers une troisième position POS3 à tenir dans la deuxième configuration basse vitesse conf2b. Le deuxième axe de rotation AXROT2 et la deuxième poussée P20 sont confondus et présentent un deuxième angle 107 positif aigu inférieur à 90 degrés avec le plan horizontal 200.

Le deuxième sens de basculement 112 est opposé au premier sens de basculement 111 vu selon une direction transversale drt allant de la première hélice 15 vers la deuxième hélice 20.

Le pas des premières pales est alors réglé par le dispositif de commande collectif pour se trouver dans la deuxième plage de pas. De même, le pas des deuxièmes pales est réglé par le dispositif de commande collectif pour se trouver dans la troisième plage de pas.

La première poussée P10 et la deuxième poussée P20 sont en outre éventuellement parallèles au plan vertical 300.

Selon un aspect, en considérant un angle positivement selon un sens allant du premier vecteur VR au troisième vecteur VL, une projection de la première poussée P10 dans le plan vertical présente un angle obtus positif avec le premier vecteur VR et une projection de la deuxième poussée P20 dans le plan vertical présente un angle aigu positif avec le premier vecteur VR.

Les figures 6 et 7 illustrent les poussées exercées à haute vitesse et leurs composantes horizontales et verticales.

La figure 8 illustre les poussées exercées à basse vitesse.

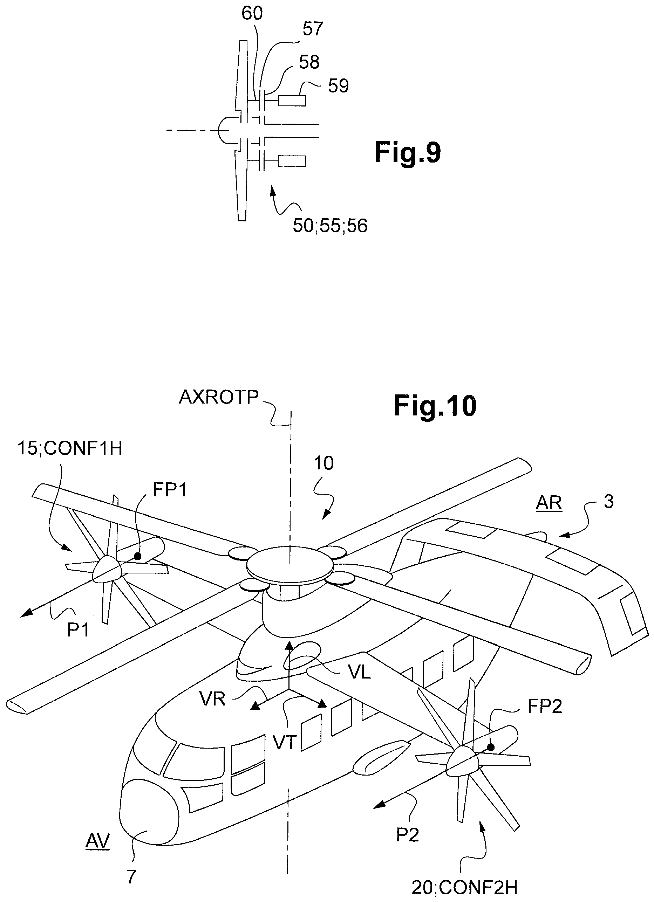

Selon une deuxième variante du deuxième mode de réalisation illustrée sur la figure 9, le système de réglage 50 comporte un premier dispositif 55 de modification cyclique du pas des pales de la première hélice 15 et un deuxième dispositif 56 de modification cyclique du pas des pales de la deuxième hélice 20.

Chaque dispositif de modification cyclique du pas comporte par exemple un plateau cyclique non tournant 58 qui n'est pas mobile en rotation autour d'un axe de rotation de l'hélice correspondante et un plateau cyclique tournant 57 qui est mobile en rotation autour de cet axe de rotation. Le plateau cyclique tournant 57 est relié à chaque pale de l'hélice correspondante par une bielle de pas 60. Eventuellement, le plateau cyclique non tournant 58 est relié directement à des commandes manœuvrables par un pilote humain ou automatique ou indirectement via des servocommandes 59. Le plateau cyclique non tournant 58 et le plateau cyclique tournant 57 sont mobiles conjointement en translation le long de l'axe de rotation et en rotation autour d'un centre de rotation mobile en translation le long de l'axe de rotation.

Un tel dispositif de modification cyclique du pas peut être du type des ensembles de plateaux cycliques de rotor par exemple et peut aussi permettre de régler collectivement le pas des pales.

Selon la figure 10, au-delà du seuil de vitesse, le premier dispositif 55 de modification cyclique du pas et le deuxième dispositif 56 de modification cyclique du pas sont par exemple manœuvrés pour obtenir des pas cycliques nuls afin que la première poussée et la deuxième poussée soient parallèles au premier vecteur.

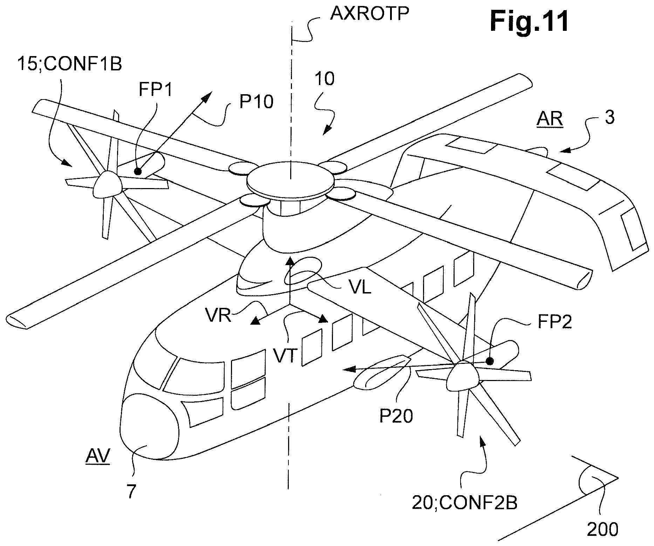

Selon la figure 11 en dessous du seuil de vitesse, le premier dispositif 55 de modification cyclique du pas et le deuxième dispositif 56 de modification cyclique du pas sont par exemple manœuvrés pour incliner la première poussée et la deuxième poussée par rapport au plan horizontal 200.

Outre ces configurations de vols décrites par les figures 10 et 11, le premier dispositif 55 de modification cyclique du pas et le deuxième dispositif 56 de modification cyclique du pas peuvent orienter à tout moment et individuellement, la première poussée et la deuxième poussée de la première hélice 15 et de la deuxième hélice 20 selon le plan horizontal 200 et selon le plan vertical 300 afin de contribuer au pilotage de l'appareil.

Au dessus du seuil de vitesse, le premier dispositif 55 de modification cyclique du pas et le deuxième dispositif 56 de modification cyclique du pas peuvent orienter la première poussée et la deuxième poussée afin de les orienter parallèlement au vecteur vitesse de l'aéronef pour réduire les efforts dynamiques exercés sur les hélices. La première poussée et la deuxième poussée ne sont alors pas nécessairement orientées selon les premier et deuxième axes de rotation de la première hélice et de la deuxième hélice.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) comprenant un fuselage (2), ledit fuselage (2) s'étendant longitudinalement de l'arrière (AR) vers l'avant (AV) d'une queue (3) vers un nez (7) et transversalement d'un premier flanc (8) vers un deuxième flanc (9), ledit fuselage (2) s'étendant verticalement de bas en haut et étant surmonté d'un unique rotor principal (10) participant au moins partiellement à la sustentation du giravion (1), ledit giravion (1) étant attaché à un référentiel orthonormé (100) présentant un premier vecteur (VR) s'étendant selon un sens d'avancement du centre de gravité (CG) du giravion (1) vers l'avant, ledit référentiel orthonormé (100) présentant un deuxième vecteur (VT) s'étendant à partir du centre de gravité (CG) selon un sens allant du premier flanc (8) au deuxième flanc (9), ledit référentiel orthonormé (100) présentant un troisième vecteur (VL) s'étendant selon un sens en élévation (S1) à partir du centre de gravité (CG) vers le rotor principal (10), ledit giravion (1) comprenant une première hélice (15) et une deuxième hélice (20) portées par respectivement deux bras (25, 26) et exerçant respectivement une première poussée (P1,P10) et une deuxième poussée (P2, P20), lesdits deux bras (25, 26) ne formant pas une aile canard, la première hélice (15) et la deuxième hélice (20) étant agencées transversalement de part et d'autre dudit fuselage (2), ladite première hélice (15) et ladite deuxième hélice (20) ayant respectivement des premières pales (18) et des deuxièmes pales (23) effectuant une rotation respectivement autour d'un premier axe de rotation (AXROT1) et d'un deuxième axe de rotation (AXROT2), lesdites premières pales (18) présentant respectivement des pas pouvant varier collectivement de façon identique dans une première plage de pas générant une dite première poussée (P1) dirigée vers l'avant du giravion (1) et dans une deuxième plage de pas générant une dite première poussée (P10) dirigée vers l'arrière du giravion, , ledit giravion (1) comporte un système de réglage (50) agissant sur la première hélice (15) et la deuxième hélice (20), lesdites deuxièmes pales (23) présentant des pas pouvant varier collectivement de façon identique au moins dans une troisième plage de pas générant uniquement une dite deuxième poussée (P2, P20) dirigée vers l'avant du giravion, ledit système de réglage (50) étant configuré pour positionner au moins durant une phase de vol stationnaire ladite première hélice (15) dans une première configuration basse vitesse (conf1b), la première poussée (P10) comprenant dans la première configuration basse vitesse (conf1b) une première composante horizontale (P101) dirigée parallèlement au premier vecteur (VR) et selon un sens contraire au premier vecteur (VR) et une première composante verticale (P102) dirigée parallèlement au troisième vecteur (VL) selon le sens en élévation (S1), ledit système de réglage (50) étant configuré pour positionner au moins durant la phase de vol stationnaire ladite deuxième hélice (20) dans une deuxième configuration basse vitesse (conf2b), la deuxième poussée (P20) comprenant dans la deuxième configuration basse vitesse (conf2b) une deuxième composante horizontale (P201) dirigée parallèlement au premier vecteur (VR) et selon un sens du premier vecteur (VR) et une deuxième composante verticale (P202) dirigée parallèlement au troisième vecteur (VL) selon un sens du troisième vecteur (VL).

2. Giravion selon la revendication 1,
**caractérisé en ce que** ledit système de réglage (50) est configuré pour positionner la première hélice (15) dans la première configuration basse vitesse (conf1b) et la deuxième hélice (20) dans la deuxième configuration basse vitesse (conf2b) lorsque le giravion (1) évolue vers l'avant à une vitesse inférieure à un seuil de vitesse.

3. Giravion selon l'une quelconque des revendications 1 à 2,
**caractérisé en ce que** dans ladite première configuration basse vitesse (conf1b) ladite première poussée (P10) présente un angle (101) aigu inférieur à 90 degrés avec un plan horizontal (200) contenant le premier vecteur (VR) et le deuxième vecteur (VT), la deuxième poussée présentant un angle (102) aigu inférieur à 90 degrés avec ce plan horizontal (200).

4. Giravion selon l'une quelconque des revendications 1 à 3,
**caractérisé en ce que** ledit système de réglage (50) est configuré pour positionner la première hélice (15) dans une première configuration haute vitesse (conf1h) et la deuxième hélice (20) dans une deuxième configuration haute vitesse (conf2h) lorsque le giravion évolue vers l'avant à une vitesse supérieure ou égale à un seuil de vitesse, ladite première poussée (P1) ayant dans la première configuration haute vitesse (conf1h) une première composante horizontale (P11) dirigée parallèlement au premier vecteur (VR) et selon le sens du premier vecteur (VR) et une première composante verticale (P12) dirigée parallèlement au troisième vecteur selon un sens contraire au sens du troisième vecteur (VL), la deuxième configuration haute vitesse (conf2h) étant identique à la deuxième configuration basse vitesse (conf2b).

5. Giravion l'une quelconque des revendications 1 à 4,
**caractérisé en ce que** lorsque le giravion (1) évolue vers l'avant à une vitesse supérieure ou égale à un seuil de vitesse, vu selon une direction transversale (drt) allant de la première hélice (15) vers la deuxième hélice (20), ladite première poussée (P1) présente un premier angle (103) aigu avec un plan horizontal (200) contenant le premier vecteur (VR) et le deuxième vecteur (VT), la deuxième poussée (P2) présentant un deuxième angle (102) aigu opposé au premier angle aigu (103) avec ce plan horizontal (200).

6. Giravion l'une quelconque des revendications 1 à 5,
**caractérisé en ce que** vu selon une direction transversale (drt) allant de la première hélice (15) vers la deuxième hélice (20), ledit premier axe de rotation (AXROT1) présente un premier angle (103) aigu avec un plan horizontal (200) contenant le premier vecteur (VR) et le deuxième vecteur (VT), le deuxième axe de rotation (AXROT2) présentant un deuxième angle (102) aigu opposé au premier angle (103) aigu avec ce plan horizontal (200).

7. Giravion selon l'une quelconque des revendications 1 à 6,
**caractérisé en ce que** ladite première hélice (15) et ladite deuxième hélice (20) ont un calage fixe, le premier axe de rotation (AXROT1) et le deuxième axe de rotation (AXROT2) étant fixes par rapport au fuselage (2).

8. Giravion selon la revendication 7,
**caractérisé en ce que** ladite première hélice (15) comprenant un premier arbre (17) d'hélice mettant en rotation un premier moyeu (16) portant des premières pales (18), ladite deuxième hélice (20) comprenant un deuxième arbre (22) d'hélice mettant en rotation un deuxième moyeu (21) portant des deuxièmes pales (23), ledit système de réglage (50) comporte un premier dispositif (19) fixant le premier arbre (17) d'hélice à un bras (25) en conférant uniquement un degré de liberté en rotation autour du premier axe de rotation (AXROT1) au premier arbre (17) d'hélice par rapport au fuselage (2), ledit système de réglage (50) comportant un deuxième dispositif (24) fixant le deuxième arbre (22) d'hélice à un bras 26 en conférant uniquement un degré de liberté en rotation autour du deuxième axe de rotation (AXROT2) au deuxième arbre (22) d'hélice par rapport au fuselage (2).

9. Giravion selon l'une quelconque des revendications 1 à 3,
**caractérisé en ce que** ledit système de réglage (50) est configuré pour positionner la première hélice (15) dans une première configuration haute vitesse (conf1h) et la deuxième hélice (20) dans une deuxième configuration haute vitesse (conf2h) lorsque le giravion (1) évolue vers l'avant à une vitesse supérieure ou égale à un seuil de vitesse, dans la première configuration haute vitesse (conf1h) la première poussée (P1) comprenant uniquement une première composante horizontale dirigée parallèlement au premier vecteur (VR) et selon le sens du premier vecteur (VR), dans la deuxième configuration haute vitesse (conf2h), ladite deuxième poussée (P2) comprenant uniquement une deuxième composante horizontale dirigée parallèlement au premier vecteur (VR) et selon le sens du premier vecteur (VR).

10. Giravion selon l'une quelconque des revendications 1 à 3 et 9,
**caractérisé en ce que** lorsque le giravion (1) évolue vers l'avant à une vitesse supérieure ou égale à un seuil de vitesse, ladite première poussée (P1) et la deuxième poussée (P2) sont coplanaires, ladite première poussée (P1) et la deuxième poussée (P2) étant parallèles à un plan horizontal (200) contenant le premier vecteur (VR) et le deuxième vecteur (VT).

11. Giravion selon l'une quelconque des revendications 1 à 3 et 9 à 10,
**caractérisé en ce que** ladite première hélice (15) comprenant un premier arbre (17) d'hélice mettant en rotation un premier moyeu (16) portant des pales, ladite deuxième hélice (20) comprenant un deuxième arbre (22) d'hélice mettant en rotation un deuxième moyeu (21) portant des pales, ledit système de réglage (50) comporte un premier système de mobilité (51) configuré pour déplacer en rotation le premier arbre (17) d'hélice autour d'un axe de basculement (AXBASC) en conférant au premier arbre (17) d'hélice par rapport au fuselage (2) uniquement un degré de liberté en rotation autour du premier axe de rotation (AXROT1) et un degré de liberté en rotation autour de l'axe de basculement (AXBASC), ledit système de réglage (50) comportant un deuxième système de mobilité (53) configuré pour déplacer en rotation le deuxième arbre (22) d'hélice autour de l'axe de basculement (AXBASC) en conférant au deuxième arbre (22) d'hélice par rapport au fuselage (2) uniquement un degré de liberté en rotation autour du deuxième axe de rotation (AXROT2) et un degré de liberté en rotation autour de l'axe de basculement (AXBASC).

12. Giravion selon la revendication 11,
**caractérisé en ce que** la première hélice (15) est configurée pour basculer selon un premier sens de basculement (111) d'une première position (POS1) à tenir dans la première configuration basse vitesse (conf1b) à une deuxième position (POS2) à tenir dans la première configuration haute vitesse (conf1h), le premier axe de rotation (AXROT1) et la première poussée (P10) étant confondus et présentant un premier angle (106) aigu inférieur à 90 degrés avec un plan horizontal (200) contenant le premier vecteur (VR) et le deuxième vecteur (VT) dans la première position (POS1), le premier axe de rotation (AXROT1) et la première poussée (P1) étant parallèles au plan horizontal (200) dans la deuxième position (POS2), et
**en ce que** la deuxième hélice (20) est configurée pour basculer selon un deuxième sens de basculement (112) d'une troisième position (POS3) à tenir dans la deuxième configuration basse vitesse (conf2b) à une quatrième position (POS4) à tenir dans la deuxième configuration haute vitesse (conf2h), le deuxième axe de rotation (AXROT2) et la deuxième poussée (P20) étant confondus et présentant un deuxième angle (107) aigu inférieur à 90 degrés avec le plan horizontal (200), le deuxième sens de basculement (112) étant opposé au premier sens de basculement (111) vu selon une direction transversale (drt) allant de la première hélice (15) vers la deuxième hélice (20), le deuxième axe de rotation (AXROT2) et la deuxième poussée (P2) étant parallèles au plan horizontal (200) dans la quatrième position (POS4).

13. Giravion selon l'une quelconque des revendications 11 à 12,
**caractérisé en ce que** le rotor principal (10) comporte des pales principales (11) effectuant une rotation autour d'un axe de rotation principal (AXROTP) de ce rotor principal (10), ledit axe de basculement (AXBASC) coupant ledit axe de rotation principal (AXROTP).

14. Giravion selon l'une quelconque des revendications 12 à 13,
**caractérisé en ce que** la première hélice (15) présente un premier centre de poussée (FP1) positionné sur l'axe de basculement (AXBASC) et la deuxième hélice (20) présente un deuxième centre de poussée (FP2) positionné sur l'axe de basculement (AXBASC).

15. Giravion selon l'une quelconque des revendications 1 à 3 et 9 à 10,
**caractérisé en ce que** ladite première hélice (15) comprenant un premier arbre (17) d'hélice mettant en rotation un premier moyeu (16) portant des premières pales (18), ladite deuxième hélice (20) comprenant un deuxième arbre (22) d'hélice mettant en rotation un deuxième moyeu (21) portant des deuxièmes pales (23), ledit système de réglage (50) comporte un premier dispositif (55) de modification cyclique du pas des pales de la première hélice (15) et un deuxième dispositif (56) de modification cyclique du pas des pales de la deuxième hélice (20).

16. Procédé pour optimiser la portance d'un giravion (1) selon l'une quelconque des revendications 1 à 15,
au cours duquel le procédé comporte l'étape suivante :
- positionnement de la première hélice (15) dans la première configuration basse vitesse (conf1b) et de la deuxième hélice (20) dans la deuxième configuration basse vitesse (conf2b) durant une phase de vol stationnaire.

17. Procédé selon la revendication 16 et l'une quelconque des revendications 4 ou 9,
**caractérisé en ce que** le procédé comporte l'étape suivante :
- positionnement de la première hélice (15) dans la première configuration haute vitesse (conf1h) et de la deuxième hélice dans la deuxième configuration haute vitesse (conf2h) lorsque le giravion (1) évolue vers l'avant à une vitesse supérieure ou égale à un seuil de vitesse.

## Patentansprüche

1. Drehflügelflugzeug (1) mit einem Rumpf (2), wobei sich der Rumpf (2) in Längsrichtung von hinten (AR) nach vorne (AV) von einem Heck (3) zu einer Nase (7) und in Querrichtung von einer ersten Flanke (8) zu einer zweiten Flanke (9) erstreckt, wobei sich der Rumpf (2) vertikal von unten nach oben erstreckt und von einem einzigen Hauptrotor (10) überragt ist, der zumindest teilweise am Auftrieb des Drehflügelflugzeugs (1) beteiligt ist, wobei das Drehflügelflugzeug (1) mit einem orthonormalen Bezugssystem (100) verbunden ist, das einen ersten Vektor (VR) umfasst, der sich in einer Richtung der Vorwärtsbewegung des Schwerpunkts (CG) des Drehflügelflugzeugs (1) erstreckt, wobei das orthonormale Bezugssystem (100) einen zweiten Vektor (VT) umfasst, der sich von dem Schwerpunkt (CG) in einer Richtung erstreckt, die von der ersten Flanke (8) zu der zweiten Flanke (9) verläuft, wobei das orthonormale Bezugssystem (100) einen dritten Vektor (VL) umfasst, der sich in einer Höhenrichtung (S1) von dem Schwerpunkt (CG) zu dem Hauptrotor (10) erstreckt, wobei das Drehflügelflugzeug (1) einen ersten Propeller (15) und einen zweiten Propeller (20) aufweist, die jeweils von zwei Armen (25, 26) getragen sind und einen ersten Schub (P1, P10) bzw. einen zweiten Schub (P2, P20) erzeugen, wobei die beiden Arme (25, 26) keinen Entenflügel bilden und der erste Propeller (15) und der zweite Propeller (20) quer auf beiden Seiten des Rumpfes (2) angeordnet sind, wobei der erste Propeller (15) und der zweite Propeller (20) jeweils erste Blätter (18) und zweite Blätter (23) aufweisen, die sich jeweils um eine erste Drehachse (AXROT1) und eine zweite Drehachse (AXROT2) drehen, wobei die ersten Blätter (18) jeweils Anstellwinkel aufweisen, die kollektiv in identischer Weise in einem ersten Anstellwinkelbereich, der einen ersten Schub (P1) erzeugt, der zur Vorderseite des Drehflügelflugzeugs (1) gerichtet ist, und in einem zweiten Anstellwinkelbereich, der einen ersten Schub (P10) erzeugt, der zur Rückseite des Drehflügelflugzeugs gerichtet ist, variieren können,
wobei das Drehflügelflugzeug (1) ein Einstellsystem (50) umfasst, das auf den ersten Propeller (15) und den zweiten Propeller (20) wirkt, wobei die zweiten Blätter (23) Steigungen aufweisen, die kollektiv auf identische Weise zumindest in einem dritten Steigungsbereich variieren können, in dem nur ein zur Vorderseite des Drehflügelflugzeugs hin gerichteter zweiter Schub (P2, P20) erzeugt wird, wobei das Einstellsystem (50) konfiguriert ist, um zumindest während einer Schwebephase des Fluges den ersten Propeller (15) in einer ersten Niedriggeschwindigkeitskonfiguration (conf1b) zu positionieren, wobei der erste Schub (P10) in der ersten Niedriggeschwindigkeitskonfiguration (conf1b) eine erste horizontale Komponente (P101), die parallel zu dem ersten Vektor (VR) und in einer zu dem ersten Vektor (VR) entgegengesetzten Richtung orientiert ist, und eine erste vertikale Komponente (P102), die parallel zu dem dritten Vektor (VL) in der Aufwärtsrichtung (S1) orientiert ist, umfasst, wobei das Einstellsystem (50) konfiguriert ist, um zumindest während der Schwebephase den zweiten Propeller (20) in einer zweiten Niedriggeschwindigkeitskonfiguration (conf2b) zu positionieren, wobei der zweite Schub (P20) in der zweiten Niedriggeschwindigkeitskonfiguration (conf2b) eine zweite horizontale Komponente (P201), die parallel zu dem ersten Vektor (VR) und in einer Richtung des ersten Vektors (VR) orientiert ist, und eine zweite vertikale Komponente (P202), die parallel zu dem dritten Vektor (VL) in einer Richtung des dritten Vektors (VL) orientiert ist, umfasst.

2. Drehflügelflugzeug nach Anspruch 1,
**dadurch gekennzeichnet, dass** das Steuersystem (50) konfiguriert ist, um den ersten Propeller (15) in der ersten Niedriggeschwindigkeitskonfiguration (conf1b) und den zweiten Propeller (20) in der zweiten Niedriggeschwindigkeitskonfiguration (conf2b) zu positionieren, wenn das Drehflügelflugzeug (1) mit einer Geschwindigkeit unterhalb einer Geschwindigkeitsschwelle vorwärts fliegt.

3. Drehflügelflugzeug nach einem der Ansprüche 1 bis 2,
**dadurch gekennzeichnet, dass** in der ersten Niedriggeschwindigkeitskonfiguration (conf 1b) der erste Schub (P10) einen spitzen Winkel (101) von weniger als 90 Grad zu einer horizontalen Ebene (200) aufweist, die den ersten Vektor (VR) und den zweiten Vektor (VT) enthält, und der zweite Schub einen spitzen Winkel (102) von weniger als 90 Grad zu dieser horizontalen Ebene (200) aufweist.

4. Drehflügelflugzeug nach einem der Ansprüche 1 bis 3,
**dadurch gekennzeichnet, dass** das Einstellsystem (50) konfiguriert ist, um den ersten Propeller (15) in einer ersten Hochgeschwindigkeitskonfiguration (conf1h) und den zweiten Propeller (20) in einer zweiten Hochgeschwindigkeitskonfiguration (conf2h) zu positionieren, wenn das Drehflügelflugzeug mit einer Geschwindigkeit vorwärts fliegt, die größer oder gleich einer Geschwindigkeitsschwelle ist, wobei der erste Schub (P1) in der ersten Hochgeschwindigkeitskonfiguration (conf1h) eine erste horizontale Komponente (P11), die parallel zum ersten Vektor (VR) und in Richtung des ersten Vektors (VR) orientiert ist, und eine erste vertikale Komponente (P12) aufweist, die parallel zum dritten Vektor in einer zur Richtung des dritten Vektors (VL) entgegengesetzten Richtung orientiert ist, wobei die zweite Hochgeschwindigkeitskonfiguration (conf2h) identisch mit der zweiten Niedriggeschwindigkeitskonfiguration (conf2b) ist.

5. Drehflügelflugzeug nach einem der Ansprüche 1 bis 4,
**dadurch gekennzeichnet, dass**, wenn das Drehflügelflugzeug (1) mit einer Geschwindigkeit vorwärts fliegt, die größer oder gleich einer Geschwindigkeitsschwelle ist, gesehen in einer Querrichtung (drt), die vom ersten Propeller (15) zum zweiten Propeller (20) verläuft, der erste Schub (P1) einen ersten spitzen Winkel (103) zu einer horizontalen Ebene (200) aufspannt, die den ersten Vektor (VR) und den zweiten Vektor (VT) enthält, und der zweite Schub (P2) einen zweiten spitzen Winkel (102) zu dieser horizontalen Ebene (200) aufspannt, der dem ersten spitzen Winkel (103) entgegengesetzt ist.

6. Drehflügelflugzeug nach einem der Ansprüche 1 bis 5,
**dadurch gekennzeichnet, dass**, in einer Querrichtung (drt), die vom ersten Propeller (15) zum zweiten Propeller (20) verläuft, die erste Drehachse (AXROT1) einen ersten spitzen Winkel (103) zu einer horizontalen Ebene (200) aufspannt, die den ersten Vektor (VR) und den zweiten Vektor (VT) enthält, und die zweite Drehachse (AXROT2) einen zweiten spitzen Winkel (102) zu dieser horizontalen Ebene (200) aufspannt, der dem ersten spitzen Winkel (103) entgegengesetzt ist.

7. Drehflügelflugzeug nach einem der Ansprüche 1 bis 6,
**dadurch gekennzeichnet, dass** der erste Propeller (15) und der zweite Propeller (20) eine feste Steigung haben, und dass die erste Drehachse (AXROT1) und die zweite Drehachse (AXROT2) in Bezug auf den Rumpf (2) fest sind.

8. Drehflügelflugzeug nach Anspruch 7,
**dadurch gekennzeichnet, dass** der erste Propeller (15) eine erste Propellerwelle (17) umfasst, die eine erste Nabe (16) dreht, die erste Blätter (18) trägt, dass der zweite Propeller (20) eine zweite Propellerwelle (22) umfasst, die eine zweite Nabe (21) dreht, die zweite Blätter (23) trägt, dass das Einstellsystem (50) eine erste Vorrichtung (19) umfasst, die die erste Propellerwelle (17) an einem Arm (25) befestigt, und dabei der ersten Propellerwelle (17) in Bezug auf den Rumpf (2) nur einen Rotationsfreiheitsgrad um die erste Rotationsachse (AXROT1) verleiht, dass das Einstellsystem (50) eine zweite Vorrichtung (24) umfasst, die die zweite Propellerwelle (22) an einem Arm (26) befestigt, und dabei der zweiten Propellerwelle (22) in Bezug auf den Rumpf (2) nur einen Rotationsfreiheitsgrad um die zweite Rotationsachse (AXROT2) verleiht.

9. Drehflügelflugzeug nach einem der Ansprüche 1 bis 3,
**dadurch gekennzeichnet, dass** das Einstellsystem (50) konfiguriert ist, um den ersten Propeller (15) in einer ersten Hochgeschwindigkeitskonfiguration (conf1h) und den zweiten Propeller (20) in einer zweiten Hochgeschwindigkeitskonfiguration (conf2h) zu positionieren, wenn das Drehflügelflugzeug (1) mit einer Geschwindigkeit vorwärts fliegt, die größer oder gleich einer Geschwindigkeitsschwelle ist, wobei in der ersten Hochgeschwindigkeitskonfiguration (conf1h) der erste Schub (P1) nur eine erste horizontale Komponente umfasst, die parallel zu dem ersten Vektor (VR) und in Richtung des ersten Vektors (VR) orientiert ist, und in der zweiten Hochgeschwindigkeitskonfiguration (conf2h) der zweite Schub (P2) nur eine zweite horizontale Komponente umfasst, die parallel zu dem ersten Vektor (VR) und in Richtung des ersten Vektors (VR) orientiert ist.

10. Drehflügelflugzeug nach einem der Ansprüche 1 bis 3 und 9,
**dadurch gekennzeichnet, dass**, wenn das Drehflügelflugzeug (1) mit einer Geschwindigkeit vorwärts fliegt, die größer oder gleich einer Geschwindigkeitsschwelle ist, der erste Schub (P1) und der zweite Schub (P2) koplanar sind, wobei der erste Schub (P1) und der zweite Schub (P2) parallel zu einer horizontalen Ebene (200) sind, die den ersten Vektor (VR) und den zweiten Vektor (VT) enthält.

11. Drehflügelflugzeug nach einem der Ansprüche 1 bis 3 und 9 bis 10,
**dadurch gekennzeichnet, dass** der erste Propeller (15) eine erste Propellerwelle (17) umfasst, die eine erste Nabe (16) dreht, die Blätter trägt, der zweite Propeller (20) eine zweite Propellerwelle (22) umfasst, die eine zweite Nabe (21) dreht, die Blätter trägt, das Einstellsystem (50) ein erstes Mobilitätssystem (51) umfasst, das konfiguriert ist, um die erste Propellerwelle (17) drehbar um eine Kippachse (AXBASC) zu bewegen, indem der ersten Propellerwelle (17) in Bezug auf den Rumpf (2) nur ein Freiheitsgrad der Drehung um die erste Drehachse (AXROT1) und ein Freiheitsgrad der Drehung um die Kippachse (AXBASC) zur Verfügung gestellt wird, wobei das Einstellsystem (50) ein zweites Mobilitätssystem (53) umfasst, das konfiguriert ist, um die zweite Propellerwelle (22) drehbar um die Kippachse (AXBASC) zu bewegen, indem der zweiten Propellerwelle (22) in Bezug auf den Rumpf (2) nur ein Freiheitsgrad der Drehung um die zweite Drehachse (AXROT2) und ein Freiheitsgrad der Drehung um die Kippachse (AXBASC) zur Verfügung gestellt wird.

12. Drehflügelflugzeug nach Anspruch 11,
**dadurch gekennzeichnet, dass** der erste Propeller (15) konfiguriert ist, um in einer ersten Kipprichtung (111) von einer ersten Position (POS1), die in der ersten Niedriggeschwindigkeitskonfiguration (conf1b) zu halten ist, in eine zweite Position (POS2), die in der ersten Hochgeschwindigkeitskonfiguration (conf1h) zu halten ist, zu kippen, wobei die erste Drehachse (AXROT1) und der erste Schub (P10) zusammenfallen und einen ersten spitzen Winkel (106) von weniger als 90 Grad zu einer horizontalen Ebene (200) aufspannen, die den ersten Vektor (VR) und den zweiten Vektor (VT) in der ersten Position (POS1) enthält, wobei die erste Drehachse (AXROT1) und der erste Schub (P1) parallel zur horizontalen Ebene (200) in der zweiten Position (POS2) sind, und
dass der zweite Propeller (20) konfiguriert ist, um in einer zweiten Kipprichtung (112) von einer dritten Position (POS3), die in der zweiten Niedriggeschwindigkeitskonfiguration (conf2b) zu halten ist, in eine vierte Position (POS4) zu kippen, die in der zweiten Hochgeschwindigkeitskonfiguration (conf2h) zu halten ist, wobei die zweite Drehachse (AXROT2) und der zweite Schub (P20) zusammenfallen und einen zweiten spitzen Winkel (107) von weniger als 90 Grad zu der horizontalen Ebene (200) aufspannen, wobei, gesehen in einer Querrichtung (drt) von dem ersten Propeller (15) zu dem zweiten Propeller (20), die zweite Kipprichtung (112) der ersten Kipprichtung (111) entgegengesetzt ist, und wobei die zweite Drehachse (AXROT2) und der zweite Schub (P2) in der vierten Position (POS4) parallel zu der horizontalen Ebene (200) sind.

13. Drehflügelflugzeug nach einem der Ansprüche 11 bis 12,
**dadurch gekennzeichnet, dass** der Hauptrotor (10) Hauptrotorblätter (11) umfasst, die sich um eine Hauptrotationsachse (AXROTP) dieses Hauptrotors (10) drehen, und dass die Kippachse (AXBASC) die Hauptrotationsachse (AXROTP) schneidet.

14. Drehflügelflugzeug nach einem der Ansprüche 12 bis 13,
**dadurch gekennzeichnet, dass** der erste Propeller (15) einen ersten Schubmittelpunkt (FP1) aufweist, der auf der Kippachse (AXBASC) positioniert ist, und der zweite Propeller (20) einen zweiten Schubmittelpunkt (FP2) aufweist, der auf der Kippachse (AXBASC) positioniert ist.

15. Drehflügelflugzeug nach einem der Ansprüche 1 bis 3 und 9 bis 10,
**dadurch gekennzeichnet, dass** der erste Propeller (15) eine erste Propellerwelle (17) umfasst, die eine erste Nabe (16) dreht, die erste Blätter (18) trägt, dass der zweite Propeller (20) eine zweite Propellerwelle (22) umfasst, die eine zweite Nabe (21) dreht, die zweite Blätter (23) trägt, und dass das Einstellsystem (50) eine erste Vorrichtung (55) zum zyklischen Ändern der Blattsteigung des ersten Propellers (15) und eine zweite Vorrichtung (56) zum zyklischen Ändern der Blattsteigung des zweiten Propellers (20) umfasst.

16. Verfahren zum Optimieren des Auftriebs eines Drehflügelflugzeugs (1) nach einem der Ansprüche 1 bis 15,
in dessen Verlauf das Verfahren den folgenden Schritt umfasst:
- Positionieren des ersten Propellers (15) in der ersten Niedriggeschwindigkeitskonfiguration (conf1b) und des zweiten Propellers (20) in der zweiten Niedriggeschwindigkeitskonfiguration (conf2b) während einer Schwebephase.

17. Verfahren nach Anspruch 16 und einem der Ansprüche 4 oder 9,
**dadurch gekennzeichnet, dass** das Verfahren den folgenden Schritt umfasst:
- Positionieren des ersten Propellers (15) in der ersten Hochgeschwindigkeitskonfiguration (conf1h) und des zweiten Propellers in der zweiten Hochgeschwindigkeitskonfiguration (conf2h), wenn das Drehflügelflugzeug (1) mit einer Geschwindigkeit vorwärts fliegt, die größer oder gleich einer Geschwindigkeitsschwelle ist.

## Claims

1. Rotorcraft (1) comprising a fuselage (2), said fuselage (2) extending longitudinally from rear (AR) to front (AV) from a tail (3) to a nose (7), and transversely from a first flank (8) to a second flank (9), said fuselage (2) extending vertically upwards and being surmounted by a single main rotor (10) contributing to providing the rotorcraft (1) with at least part of its lift, a rectangular reference frame (100) being attached to said rotorcraft (1) and presenting a first unit vector (VR) extending in a forward direction from the centre of gravity (CG) of the rotorcraft (1) towards the front (AV), said rectangular reference frame (100) presenting a second unit vector (VT) extending from the centre of gravity (CG) in a direction going from the first flank (8) to the second flank (9), and said rectangular reference frame (100) presenting a third unit vector (VL) extending in an elevation direction (S1) from the centre of gravity (CG) towards the main rotor (10), said rotorcraft (1) comprising a first propeller (15) and a second propeller (20) carried respectively by two arms (25, 26) and exerting respectively first thrust (P1, P10) and a second thrust (P2, P20), said two arms (25, 26) not forming a canard wing, the first propeller (15) and the second propeller (20) being arranged transversely on either side of said fuselage (2), said first propeller (15) and said second propeller (20) respectively having first blades (18) and second blades (23) for rotating respectively about a first axis of rotation (AXROT1) and a second axis of rotation (AXROT2), said first blades (18) presenting pitch that can vary collectively in an identical manner over a first pitch range generating a said first thrust (P1) directed towards the front of the rotorcraft (1) and over a second pitch range generating a said first thrust (P10) directed towards the rear of the rotorcraft (1),
where said rotorcraft (1) includes an adjustment system (50) acting on the first propeller (15) and the second propeller (20), said second blades (23) presenting pitch that can vary collectively in an identical manner at least over a third pitch range generating a said second thrust (P2, P20) directed solely towards the front of the rotorcraft, said adjustment system (50) being configured, at least during a stage of hovering flight, to position said first propeller (15) in a first low speed configuration (conflb), the first thrust (P10) in the first low speed configuration (conf1b) having a first horizontal component (P101) directed parallel to the first vector (VR) and in a direction opposite to the first vector (VR), and a first vertical component (P102) directed parallel to the third vector (VL) in the elevation direction (S1), said adjustment system (50) being configured, at least during the stage of hovering flight, to position said second propeller (20) in a second low speed configuration (conf2b), the second thrust (P20) in the second low speed configuration (conf2b) comprising a second horizontal component (P201) directed parallel to the first vector (VR) and in the same direction as the first vector (VR), and a second vertical component (P202) directed parallel to the third vector (VL) in the same direction as the third vector(VL).

2. Rotorcraft according to claim 1, **characterised in that** said adjustment system (50) is configured to position the first propeller (15) in the first low speed configuration (conf1b) and the second propeller (20) in the second low speed configuration (conf2b) when the rotorcraft (1) is travelling forwards at a speed less than a speed threshold.

3. Rotorcraft according to either of claims 1 and 2, **characterised in that** in the first low speed configuration (conf1b) the first thrust (P10) presents an acute angle (101) of less than 90 degrees relative to a horizontal plane (200) containing the first vector (VR) and the second vector (VT), the second thrust presenting an acute angle (102) of less than 90 degrees with that horizontal plane (200).

4. Rotorcraft according to any one of claims 1 to 3, **characterised in that** said adjustment system (50) is configured to position the first propeller (15) in a first high speed configuration (conf1h) and the second propeller (20) in a second high speed configuration (conf2h) when the rotorcraft is flying forwards at a speed greater than or equal to a speed threshold, said first thrust (P1) in the first high speed configuration (conf1h) having a first horizontal component (P11) directed parallel to the first vector (VR) and in the same direction as the first vector (VR), and a first vertical component (P12) directed parallel to the third vector in a direction opposite to the direction of the third vector (VL), the second high speed configuration (conf2h) being identical to the second low speed configuration (conf2b).

5. Rotorcraft (1) according to any one of claims 1 to 4, **characterised in that** when the rotorcraft (1) is flying forwards at a speed greater than or equal to a speed threshold, and when seen in a transverse direction (drt) going from the first propeller (15) towards the second propeller (20), said first thrust (P1) presents a first acute angle (103) relative to a horizontal plane (200) containing the first vector (VR) and the second vector (VT), the second thrust (P2) presenting a second acute angle opposite to the first acute angle (103) relative to that horizontal plane (200) .

6. Rotorcraft according to any one of claims 1 to 5, **characterised in that**, when seen in a transverse direction (drt) going from the first propeller (15) towards the second propeller (20), said first axis of rotation (AXROT1) presents a first acute angle (103) with a horizontal plane (200) containing the first vector (VR) and the second vector (VT), the second axis of rotation (AXROT2) presenting a second acute angle (102) opposite to the first acute angle (103) relative to that horizontal plane (200).

7. Rotorcraft according to any one of claims 1 to 6, **characterised in that** said first propeller (15) and the second propeller (20) present fixed settings, the first axis of rotation (AXROT1) and the second axis of rotation (AXROT2) being fixed relative to the fuselage (2).

8. Rotorcraft according to claim 7, wherein the first propeller (15) comprises a first propeller shaft (17) for rotating a first hub (16) carrying first blades (18), the second propeller (20) comprises a second propeller shaft (22) for rotating a second hub (21) carrying second blades (23), and said adjustment system (50) comprises a first device (19) fastening the first propeller shaft (17) to an arm (25) while imparting to the first propeller shaft (17) a single degree of freedom to move in rotation about the first axis of rotation (AXROT1) relative to the fuselage (2), said adjustment system (50) comprising a second device (24) fastening the second propeller shaft (22) to an arm (26) while conferring to the second propeller shaft (22) a single degree of freedom to move in rotation about the second axis of rotation (AXROT2) relative to the fuselage (2).

9. Rotorcraft according to any one of claims 1 to 3, **characterised in that** said adjustment system (50) is configured to position the first propeller (15) in a first high speed configuration (conf1h) and the second propeller (20) in a second high speed configuration (conf2h) when the rotorcraft (1) is flying forwards at a speed greater than or equal to a speed threshold, the first thrust (P1) in the first high speed configuration (conf1h) comprising solely a first horizontal component directed parallel to the first vector (VR) and in the same direction as the first vector (VR), said second thrust (P2) in the second high speed configuration (conf2h) comprising solely a second horizontal component directed parallel to the first vector (VR) and in the same direction as the first vector (VR).

10. Rotorcraft according to any one of claims 1 to 3, and 9, **characterised in that** when the rotorcraft (1) is flying forwards at a speed greater than or equal to a speed threshold, said first thrust (P1) and the second thrust (P2) are coplanar, said first thrust (P1) and the second thrust (P2) being parallel to a horizontal plane (200) containing the first vector (VR) and the second vector (VT).

11. Rotorcraft according to any one of claims 1 to 3, and 9 and 10, **characterised in that** said first propeller (15) comprises a first propeller shaft (17) for rotating a first hub (16) carrying blades, said second propeller (20) comprises a second propeller shaft (22) for rotating a second hub (21) carrying blades, and said adjustment system (50) comprises a first mobility system (51) configured to move the first propeller shaft (17) in rotation about a tilt axis (AXBASC) imparting to the first propeller shaft (17) relative to the fuselage (2) solely one degree of freedom to move in rotation about the first axis of rotation (AXROT1) and one degree of freedom to move in rotation about the tilt axis (AXBASC), said adjustment system (50) including a second mobility system (53) configured to move the second propeller shaft (22) in rotation about the tilt axis (AXBASC) imparting to the second propeller shaft (22) relative to the fuselage (2) solely one degree of freedom to move in rotation about the second axis of rotation (AXROT2), and one degree of freedom to move in rotation about the tilt axis (AXBASC).

12. Rotorcraft according to claim 11, **characterised in that** the first propeller (15) is configured to tilt in a first tilt direction (111) from a first position (POS1) to be held in the first low speed configuration (conf1b) to a second position (POS2) to be held in the first high speed configuration (conf1h), the first axis of rotation (AXROT1) and the first thrust (P10) coinciding and presenting a first acute angle (106) of less than 90 degrees relative to a horizontal plane (200) containing the first vector (VR) and the second vector (VT) in the first position (POS1), the first axis of rotation (AXROT1) and the first thrust (P1) being parallel to the horizontal plane (200) in the second position (POS2); and
**in that** the second propeller (20) is configured to tilt in a second tilt direction (112) from a third position (POS3) to be held in the second low speed configuration (conf2b) to a fourth position (POS4) to be held in the second high speed configuration (conf2h), the second axis of rotation (AXROT2) and the second thrust (P20) coinciding and presenting a second acute angle (107) of less than 90 degrees relative to the horizontal plane (200), the second tilt direction being opposite to the first tilt direction (111) when seen in a transverse direction (drt) going from the first propeller (15) to the second propeller (20), the second axis of rotation (AXROT2) and the second thrust (P2) being parallel to the horizontal plane (200) in the fourth position (POS4).

13. Rotorcraft according to either of claims 11 and 12, **characterised in that** the main rotor (10) includes main blades (11) rotating about a main axis of rotation (AXROTP) of this main rotor (10), said tilt axis (AXBASC) intersecting said main axis of rotation (AXROTP).

14. Rotorcraft according to either of claims 12 and 13, **characterised in that** the first propeller (15) presents a first thrust centre (FP1) positioned on the tilt axis (AXBASC) and the second propeller (20) presents a second centre of thrust (FP2) positioned on the tilt axis (AXBASC).

15. Rotorcraft according to any one of claims 1 to 3, and 9 or 10, **characterised in that** said first propeller (15) comprises a first propeller shaft (17) for rotating a first hub (16) carrying first blades (18), said second propeller (20) comprises a second propeller shaft (22) for rotating a second hub (21) carrying second blades (23), and the adjustment system (50) includes a first device (55) for cyclically modifying the pitch of the blades of the first propeller (15) and a second device (56) for cyclically modifying the pitch of the blades of the second propeller (20).

16. Method of optimising the lift of a rotorcraft (1) according to any one of claims 1 to 15,
in which the method includes the following step:
- positioning the first propeller (15) in the first low speed configuration (conflb) and the second propeller (20) in the second low speed configuration (conf2b) during a stage of hovering flight.

17. Method according to claim 16 and either of claims 4 or 9, **characterised in that** the method includes the following step:
- positioning the first propeller (15) in the first high speed configuration (conflh) and the second propeller (20) in the second speed configuration (conf2h) when the rotorcraft (1) is travelling forwards at a speed greater than or equal to a speed threshold.
